# EUROPÄISCHE PATENTANMELDUNG

(11) **EP 1 167 014 A2**
(43) Veröffentlichungstag der Anmeldung: **02.01.2002**
(21) Anmeldenummer: 01201923.8
(22) Anmeldetag: 22.05.2001
(51) Int. Cl.: B32B 17/10, C03C 27/12, B60J 1/00

(54) **Sicherheitsscheibe aus Kunststoff für Kraftfahrzeuge und Verfahren zur Stabilisierung von Sicherheitsscheiben in Kraftfahrzeugen**

(30) Priorität: 26.06.2000 DE 10032071
(71) Anmelder: KRD Sicherheitstechnik GmbH, 21502 Geesthacht (DE)
(72) Erfinder: Brammer, Gerd, 21339 Lüneburg (DE)
(74) Vertreter: Emmel, Thomas, Dipl.-Biol., Dr.

(57) **Zusammenfassung**

Sicherheitsscheibe aus Kunststoff für Kraftfahrzeuge, mit einem zentralen transparenten Bereich mit im wesentlichen konstanter, üblichen Sicherheitsanforderungen genügender Dicke und einem den zentralen Bereich umlaufenden Randbereich, in dem die Sicherheitsscheibe mit ihrer im montierten Zustand zur Karosserie weisenden Innenseite mit der Karosserie des Kraftfahrzeugs verbindbar ist, wobei die Sicherheitsscheibe (11, 11') auf ihrer Innenseite mit einem umlaufenden flächigen Element (15, 15') flächig verbunden ist, das so ausgebildet ist, daß es den Randbereich (24, 24') und einen angrenzenden Abschnitt des zentralen Bereichs (23, 23') der Sicherheitsscheibe (11, 11') kontaktiert und das aus einem Material mit ausreichender Festigkeit hergestellt ist, um die Sicherheitsscheibe (11, 11') im Kontaktbereich zu stabilisieren.

## Beschreibung

Die Erfindung betrifft eine Sicherheitsscheibe für Kraftfahrzeuge nach dem Oberbegriff des Anspruches 1.

Gattungsgemäße Sicherheitsscheiben finden insbesondere Verwendung als Schutzverglasung z.B. bei Einsatzkraftfahrzeugen der Polizei. Es ist bei Einsätzen nicht auszuschließen, daß die Kraftfahrzeuge mit Steinen beworfen, mit Präzisionsschleudern beschossen werden oder auch daß gezielte Schläge mit Stangen etc auf den Scheibenbereich erfolgen.

Die Sicherheitsscheiben müssen unter diesen Umständen die Fahrzeuginsassen vor Verletzungen schützen und dementsprechend aus einem geeigneten Werkstoff und mit einer Dicke hergestellt sein, die einen ausreichenden Widerstand gegen die erwähnten Schlag-, Wurf- und Schußeinwirkungen etc. gewährleistet.

Gattungsgemäße Sicherheitsscheiben, die als Frontscheiben und auch im Seiten-und Heckbereich der Fahrzeuge vorgesehen werden können, werden üblicherweise aus UV-stabilisiertem Kunststoff, z.B. Polycarbonat mit Dicken zwischen 8 - 10 mm hergestellt. So hergestellte Sicherheitsscheiben können den oben angesprochenen Gewalteinwirkungen aufgrund ihrer Dicke und ihrer Elastizität standhalten.

Üblicherweise werden Sicherheitsscheiben, wie andere KFZ-Scheiben, von außen in eine in der Karosserie vorgesehene umlaufende Aufnahme eingesetzt und darin mit ihrem Randbereich verklebt. Im Übergang zwischen Randbereich und zentralen Bereich weisen gattungsgemäße Sicherheitsscheiben eine zumindest theoretisch etwas geringere Widerstandskraft auf, da hier aufgrund der Nähe zur Befestigung an der Karosserie die Elastizität geringer ist als in den übrigen Bereichen der Sicherheitsscheibe. Von außen gegen diesen Bereich gerichtete Kräfte können die Scheibe z.B. gegen die Kante der Aufnahme der Karosserie drücken, wobei die Scheibe unter ungünstigen Umständen brechen kann.

Aufgabe der Erfindung ist es, eine Sicherheitsscheibe für Kraftfahrzeuge zu schaffen, die eine noch höhere Bruchsicherheit aufweist,

Gelöst wird diese Aufgabe mit einer Sicherheitsscheibe, die die kennzeichnenden Merkmale des Anspruches 1 aufweist.

Erfindungsgemäß ist vorgesehen, daß die Sicherheitsscheibe auf ihrer im montierten Zustand zur Karosserie weisenden Seite mit einem umlaufenden flächigen Element flächig verbunden ist, das so ausgebildet ist, daß es den Randbereich und einen angrenzenden Abschnitt des zentralen Bereichs der Sicherheitsscheibe mindestens teilweise kontaktiert und das aus einem die Sicherheitsscheibe im Kontaktbereich stabilisierenden Material besteht.

Der Widerstand der Sicherheitsscheibe in ihren besonders gefährdeten Bereichen gegen äußere Einwirkungen wird dadurch erfindungsgemäß effektiv verstärkt.

Wie im Stand der Technik ist die Sicherheitsscheibe aus schlagresistentem Kunststoff insbesondere Polycarbonat hergestellt.

Sicherheitsscheibe und umlaufendes flächiges Element können wie angesprochen als Verbund hergestellt werden. Bevorzugt wird das umlaufende flächige Element mit der Sicherheitsscheibe verklebt. Bevorzugt werden für die Verklebung Polyurethan- Kleber eingesetzt.

Denkbar ist aber auch gemäß Anspruch 6, daß die Sicherheitsscheibe und ihr umlaufendes flächiges Element erst beim Einbau in die Karosserie zusammengefügt werden und dementsprechend auch als Bausatz bereitgehalten werden könnnen.

Vorzugsweise ist das flächige Element als umlaufender Streifen mit einer Dicke von z.B. 2 bis 4 mm ausgebildet. Insbesondere kann das flächige Element aus Metall z.B. aus VA-Stahl bestehen. Das flächige Element kann selbstverständlich auch mit anderen Dicken und/oder aus anderem Material hergestellt sein, solange gewährleistet ist, daß es in der Lage ist, die Sicherheitsscheibe zu stabilisieren. In diesem Zusammenhang sollte bevorzugt ein Material mit scherhemmender Wirkung eingesetzt werden.

Üblicherweise werden Fahrzeuge mit Sicherheitsscheiben nachgerüstet. Ein Problem in diesem Zusammenhang ist, daß die an Karosserien herkömmlicher Fahrzeuge vorgesehenen Aufnahmen für Scheiben mit geringerer Dicke, z.B. 4 mm ausgelegt sind.

In einer Ausgestaltung der Erfindung ist daher vorgesehen, daß die erfindungsgemäßen Sicherheitsscheiben einen gegenüber dem zentralen Bereich dickenreduzierten Randbereich aufweisen, mit dem sie ohne Überstand in die Aufnahmen der Fahrzeugkarosserie einpassbar sind. Herkömmliche Sicherheitsscheiben werden bei der Herstellung z.B. mittels Fräsung von einer Dicke von z.B. 10 mm im zentralen Bereich auf z.B. 4 mm im Randbereich reduziert.

Das erfindungsgemäß vorgesehene umlaufende flächige Element stabilisiert Sicherheitsscheiben gemäß dieser Ausgestaltung in besonders bevorzugter Weise im Bereich dieser Fräsung.

Gemäß einer weiteren Ausgestaltung ist vorgesehen, daß die erfindungsgemäße Sicherheitsscheibe nicht einteilig, sondern eine aus zwei transparenten Kunststoffscheiben gebildete Verbundscheibe ist.

Die beiden Scheiben besitzen unterschiedlich große Flächen und sind so dimensioniert und miteinander verbunden, daß die größere Scheibe einen die kleinere Scheibe umlaufend überragenden Bereich ausbildet. Dieser umlaufende Bereich der größeren Scheibe bildet den Randbereich, mit dem die Verbundscheibe mit der Karosserie verbindbar bzw. in eine in der Karosserie vorgesehene Aufnahme einsetzbar ist. Der zentrale Bereich entspricht im wesentlichen der Fläche der kleineren Scheibe.

Bei dieser Ausgestaltung ist das umlaufende flächige Element teilweise zwischen den beiden Scheiben in Sandwichanordnung vorgesehen. Das flächige Element ist so ausgebildet und angeordnet, daß es in einem äußeren Teil des zentralen Bereiches zwischen beiden Scheiben und auf dem Randbereich der größeren Scheibe verläuft.

Beim Einbau in ein Fahrzeug wird der Randbereich der Sicherheitsscheibe mit darauf angeordnetem flächigen Element in z.B. einer Aufnahme der Karosserie, insbesondere über Verklebung, befestigt. Das flächige Element ist dann mit einem wesentlichen Teil seiner Fläche fest mit der starren Karosserie verbunden. Der in den zentralen Bereich der Sicherheitsscheibe reichende freie Teil des flächigen Elements ist damit sehr belastbar und kann in besonders effektiver Weise die Sicherheitsscheibe in dem theoretisch gefährdeten Übergang zwischen Randbereich und zentralen Bereich stabilisieren.

In der Regel werden wie angesprochen die Sicherheitsscheibe und das flächige Element über Verklebungen miteinander verbunden. Weiterhin wird bevorzugt auch der Randbereich zusammen mit dem aufgeklebten flächigen Element mittels Verklebung in der Aufnahme der Karosserie befestigt. In beiden Fällen können bevorzugt Polyurethankleber eingesetzt werden.

Besonders bevorzugt werden in diesem Zusammenhang in dem flächigen Element Löcher vorgesehen. Erfahrungsgemäß sollte die Verklebung einer Scheibe in der Aufnahme einer Karosserie eine gewisse Dicke (z.B. 2 - 4 mm oder mehr) aufweisen. Über die Löcher kann der Klebstoff durch das zwischen Aufnahme und Scheibe befindliche flächige Element hindurchtreten und eine direkte Klebebrücke zwischen der Karosserieaufnahme und der Scheibe herstellen, wobei im Bereich der Klebebrücke die erforderliche Dicke der Verklebung gewährleistet ist.

Die erfindungsgemäße Sicherheitsscheibe, bzw. die sie bildenden Scheiben werden wie oben angesprochen in aller Regel aus schlagresistentem Kunststoff hergestellt. Ein besonders geeigneter Kunststoff ist z.B. Polycarbonat. Übliche Dikken bei Verbundscheiben sind z.B. 6 mm für die größere, in aller Regel nach außen weisende Scheibe und 4 mm für die kleinere, zumeist innere Scheibe. Einteilige Sicherheitsscheiben werden bevorzugt mit Dicken von 8 bzw. 10 mm hergestellt. Diese Dicken können aber ohne weiteres abhängig von dem tatsächlich eingesetzten Kunststoffen und den besonderen Bedingungen variiert werden.

Im folgenden soll die Erfindung anhand dreier Abbildungen näher erläutert werden.

Dabei zeigt
- Figur 1: eine seitliche Teilansicht von außen auf eine in einer Karosserie angeordnete Sicherheitsscheibe,
- Figur 2: eine erste Ausführung der erfindungsgemäßen Sicherheitsscheibe in einer Schnittansicht entlang der Linie 16 in Figur 1,
- Figur 3: zeigt eine zweite Ausführung der erfindungsgemäßen Sicherheitsscheibe, wiederum im Schnitt entlang der Linie 16 in Figur 1.

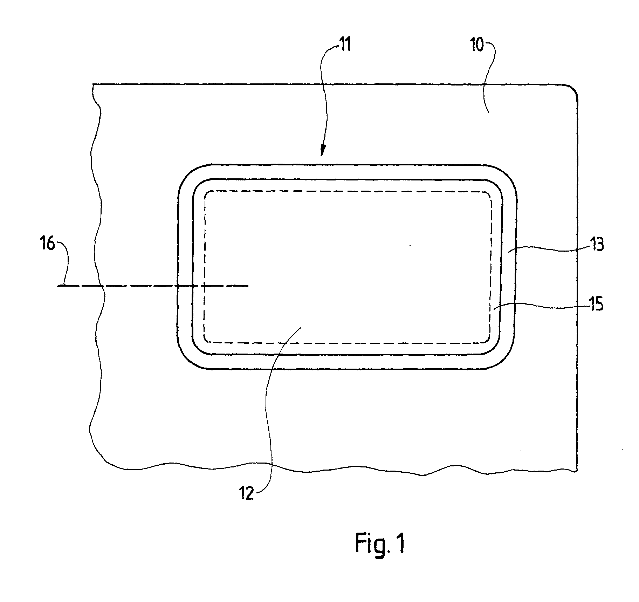

In Figur 1 ist nur schematisch ein Ausschnitt einer Kraftfahrzeugkarosserie 10 dargestellt, in dem eine Sicherheitsscheibe 11 angeordnet ist.

Die Sicherheitsscheibe 11 weist einen zentralen transparenten Bereich 12 und einen diesen umlaufenden Randbereich 13 auf. Der Randbereich 13 kann, wie hier nicht zu erkennen ist, gegenüber dem zentralen Bereich 12 in seiner Dicke reduziert sein, um ohne Überstand in eine ebenfalls nicht zu erkennende Aufnahme in der Karosserie 10 einpassbar zu sein.

Weiterhin angedeutet ist ein flächiges umlaufendes Element 15, das den Randbereich 13 abdeckt und sich bis in den zentralen Bereich 12 hinein erstreckt.

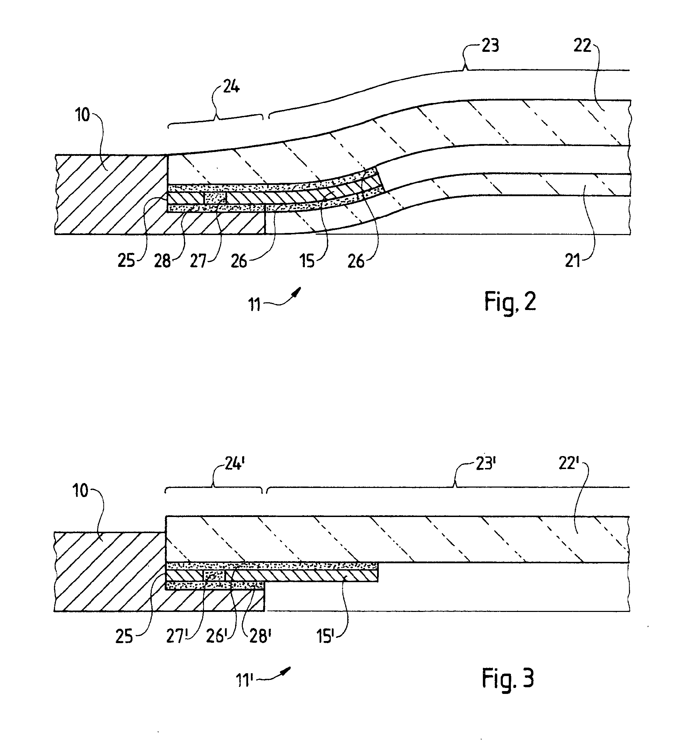

Zur Verdeutlichung wird auf Figur 2 verwiesen, die eine Schnittdarstellung entlang der Linie 16 in Figur 1 zeigt.

Figur 2 zeigt wiederum die Kraftfahrzeugkarosserie 10 mit der eingesetzten Sicherheitsscheibe 11 in Teilansicht. Der nicht dargestellte Fahrzeuginnenraum befindet sich in dieser Ansicht (und auch in Fig.3) im unteren Bereich der Figur, also unterhalb der Sicherheitsscheibe 11.

Hier ist nun zu erkennen, daß die Sicherheitsscheibe 11 eine Verbundscheibe aus einer in aller Regel im eingesetzten Zustand ins Innere des Fahrzeuges weisenden kleineren Scheibe 21 und einer äußeren Scheibe 22 mit größerer Fläche ist.

Die Verbundscheibe 11 besitzt einen zentralen Bereich 23, der durch beide Scheiben 21 und 22 abgedeckt wird. Zusätzlich dazu weist die Scheibe 22 einen die kleinere Scheibe 21 umlaufend überragenden Randbereich 24 auf, mit dem sie passgenau in eine Aufnahme 25 in der Karosserie eingesetzt werden kann.

Zwischen den Scheiben 21 und 22 ist, wie schon in Figur 1 angesprochen, ein umlaufendes flächiges Element 15 vorgesehen, das mit dem Randbereich 24 der Scheibe 22 und in einem daran angrenzenden Übergangsbereich mit beiden Scheiben 21 und 22 in Sandwichanordnung verbunden ist. Im dargestellten Fall erfolgt die Verbindung über Verklebungen 26.

Wie oben angesprochen dient das flächige umlaufende Elemente 15 dazu, die Sicherheitsscheibe 11 bzw. die einzelnen Scheiben 21 und 22 im Randbereich 24 und im angrenzenden Teil des zentralen Bereichs 23 zu stabilisieren.

Man erkennt auch hier, daß die äußere Scheibe 22 in ihrem zentralen Bereich mit etwas größerer Dicke ausgebildet ist, als in ihrem Randbereich. Die Scheibe 22 ist in ihrem Randbereich ist mittels einer z.B. konischen Fräsung nach außen hin verjüngt, um die erforderliche Passgenauigkeit zu der Aufnahme 25 herzustellen, in der sie über eine Verklebung 28 befestigt werden kann. In diesem gezeigten Fall stabilisiert das flächige Element 15 daher auch noch den Übergangsbereich zwischen den unterschiedlichen Dicken der Scheibe 22.

Wie oben angesprochen bestehen die Scheiben 22 und 21 aus Kunststoff, bevorzugt aus schlagsicherem Polycarbonat, während das flächige Element 15 bevorzugt aus Metall bestehen kann. Zusätzlich ist vorgesehen, daß in dem Element 15 Löcher 27 vorgesehen sind, durch die eine direkte Klebstoffverbindung (aus Verklebung 26 und 28) zwischen der Scheibe 22 und der Aufnahme 25 hergestellt werden kann, die die üblicherweise gewünschte Dicke aufweist.

Figur 3 zeigt eine eine einteilige Sicherheitscheibe 11' betreffende Ausführungsform wiederum in einer Schnittansicht, die im wesentlichen entlang der Linie 16 in Figur 1 verläuft.

Die Sicherheitsscheibe 11' weist eine Scheibe 22' mit üblicher Dicke (z.B 8 oder 10 mm) auf, die in ihrem Randbereich 24' und im Übergang zu ihrem zentralen Bereich 23' über eine Verklebung 26' mit einem flächigen stabilisierenden Element 15' verbunden ist. Wie bei der in Fig. 2 gezeigten Ausführung sind auch in diesem Fall Scheibe 22' und das flächige Element 15 zusammen in der Aufnahme 25 der Karosserie 10 mittels Verklebung 28' befestigt, wobei wiederum Löcher 27' in dem flächigen Element 15' vorgesehen sind, die eine Verbindung der Verklebungen 26' und 28' zu einer Klebeschicht mit höherer Dicke ermöglichen.

## Patentansprüche

1. Sicherheitsscheibe aus Kunststoff für Kraftfahrzeuge, mit einem zentralen transparenten Bereich mit im wesentlichen konstanter, üblichen Sicherheitsanforderungen genügender Dicke und einem den zentralen Bereich umlaufenden Randbereich, in dem die Sicherheitsscheibe mit ihrer im montierten Zustand zur Karosserie weisenden Innenseite mit der Karosserie des Kraftfahrzeugs verbindbar ist, **dadurch gekennzeichnet, daß** die Sicherheitsscheibe (11, 11') auf ihrer Innenseite mit einem umlaufenden flächigen Element (15, 15') flächig verbunden ist, das so ausgebildet ist, daß es den Randbereich (24, 24') und einen angrenzenden Abschnitt des zentralen Bereichs (23, 23') der Sicherheitsscheibe (11, 11') kontaktiert und das aus einem Material mit ausreichender Festigkeit hergestellt ist, um die Sicherheitsscheibe (11, 11') im Kontaktbereich zu stabilisieren.

2. Sicherheitsscheibe nach Anspruch 1, **dadurch gekennzeichnet, daß** das umlaufende flächige Element (15, 15') mit dem Randbereich (24, 24') und dem angrenzenden Abschnitt der Sicherheitsscheibe (11, 11') durch Verklebung (26, 26') verbunden ist.

3. Sicherheitsscheibe nach Anspruch 1 oder 2, **dadurch gekennzeichnet, daß** das flächige Element (15, 15') ein umlaufender Metallstreifen ist.

4. Sicherheitsscheibe nach einem der vorhergehenden Ansprüche, **dadurch gekennzeichnet, daß** sie in ihrem Randbereich (23) eine gegenüber dem zentralen Bereich (24) reduzierte Dicke aufweist.

5. Sicherheitsscheibe nach einem der vorhergehenden Ansprüche, **dadurch gekennzeichnet, daß** sie eine Verbundscheibe aus zwei parallel zueinander ausgerichteten Scheiben (21, 22) ist, wobei eine (22) der beiden Scheiben eine größere Fläche als die andere Scheibe (21) besitzt, und beide Scheiben so miteinander verbunden sind, daß die größere Scheibe (22) einen die kleinere Scheibe (21) umlaufend überragenden Bereich (24) ausbildet, der als mit der Karosserie verbindbarer Randbereich (24) dient und wobei das flächige Element (15) im an den Randbereich (24) angrenzenden Abschnitt des zentralen Bereichs (23) zwischen den Scheiben (21, 22) angeordnet ist.

6. Verfahren zur Stabilisierung einer Sicherheitsscheibe aus Kunsstoff für Kraftfahrzeuge im eingebauten Zustand, wobei die Sicherheitsscheibe einen zentralen transparenten Bereich mit im wesentlichen konstanter, üblichen Sicherheitsanforderungen genügenden Dicke und einen den zentralen Bereich umlaufenden Randbereich aufweist, mit dem die Sicherheitsscheibe mit der Karosserie des Kraftfahrzeugs verbindbar ist, **dadurch gekennzeichnet, daß** zwischen Sicherheitsscheibe (11, 11') und Aufnahme (25) ein umlaufendes flächiges Element (15, 15') vorgesehen wird, das so ausgebildet ist, daß es in montiertem Zustand mit seiner einen Seite die Karosserie (10) und mit seiner anderen Seite den Randbereich (24, 24') und einen angrenzenden Abschnitt des zentralen Bereichs (23, 23') der Sicherheitsscheibe (11, 11') kontaktiert.
